# EUROPÄISCHE PATENTSCHRIFT

(11) **EP 3 839 567 B1**
(45) Veröffentlichungstag und Bekanntmachung des Hinweises auf die Patenterteilung: **30.07.2025**
(21) Anmeldenummer: 19217531.3
(22) Anmeldetag: 18.12.2019
(51) Int. Cl.: G01S 17/933, G01S 3/783, F41H 11/02, F41G 7/22

(54) **FLUGKÖRPERWARNER UND EIN VERFAHREN ZUM WARNEN VOR EINEM FLUGKÖRPER**
MISSILE WARNING AND A METHOD FOR ISSUING A WARNING ABOUT A MISSILE
AVERTISSEUR DE MISSILES ET PROCÉDÉ D'AVERTISSEMENT DE MISSILES

(43) Veröffentlichungstag der Anmeldung: 23.06.2021
(73) Patentinhaber: HENSOLDT Sensors GmbH, 82024 Taufkirchen (DE)
(72) Erfinder: Assel, Michael, 86438 Kissing (DE)
(74) Vertreter: LifeTech IP Spies & Behrndt Patentanwälte PartG mbB

(56) Entgegenhaltungen:
- EP-A1- 3 591 427
- WO-A2-2006/083278
- US-A1- 2002 133 294
- US-A1- 2017 183 104

## Beschreibung

Die vorliegende Erfindung bezieht sich auf einen Flugkörperwarner und auf ein Verfahren zum Warnen vor einem Flugkörper und insbesondere auf einen passiven Flugkörperwarner mit Rückverfolgung.

### HINTERGRUND DER ERFINDUNG

Flugkörperwarner sind ein notwendiger Teil von Selbstschutzsystemen (z.B. von Flugzeugen), deren primäre Aufgabe in der Detektion und Deklaration von Flugkörpern liegt. Da solche Flugkörper eine potentielle Gefahr für das zu warnende Objekt (im Folgenden Zielobjekt genannt; es kann sich dabei um den Träger des Flugkörperwarners wie auch um ein drittes Objekt handeln) darstellen können, erfolgt bei einer Detektion eine Meldung an ein geeignetes übergeordnetes System, um entsprechende Gegenmaßnahmen einleiten zu können.

Passive Flugkörperwarnsysteme können beispielsweise auf optischen Signalen basieren - zum Beispiel durch ein Detektieren des heißen Abgasstrahls des Flugkörpers. Hierzu können beispielsweise eine oder mehrere ortsauflösende Kameras genutzt werden, die jeweils in einem speziellen Spektralbereich arbeiten. Grundsätzlich detektieren solche Kameras jedoch alle Objekte, die sich in einem Erfassungsraum befinden und eine Signatur im Spektralbereich der Kamera besitzen. Darunter sind häufig eine Vielzahl von nichtbedrohlichen Quellen, wie beispielsweise Feuer, Lampen oder auch Flugkörper, die das Zielobjekt nicht treffen würden. Die eigentliche Bedrohung besteht vielmehr in Flugkörpern, die sich auf das Zielobjekt zubewegen und daher prinzipiell eine Bedrohung darstellen können.

Eine Unterscheidung zwischen bedrohlichen Quellen und nichtbedrohlichen Quellen (das Verifizieren) erfolgt innerhalb eines Klassifikators. Dazu werden beispielsweise charakteristische Merkmale genutzt (z.B. ein Intensitätsverlauf oder eine sonstige charakteristische Signatur), die zu der betreffenden Quelle gehören. Als Resultat der Klassifizierung werden im Idealfall nur tatsächliche Bedrohungen erkannt und für weitere Gegenmaßnahmen an ein entsprechendes Selbstschutzsystem des Zielobjekts und/oder dem Piloten gemeldet (Deklaration).

Bei der Justage des Klassifikators ist typischerweise ein Kompromiss zu finden zwischen einer niedrigen Falschalarmrate (FAR) und einer maximalen Deklarationswahrscheinlichkeit von Bedrohungen (POD).

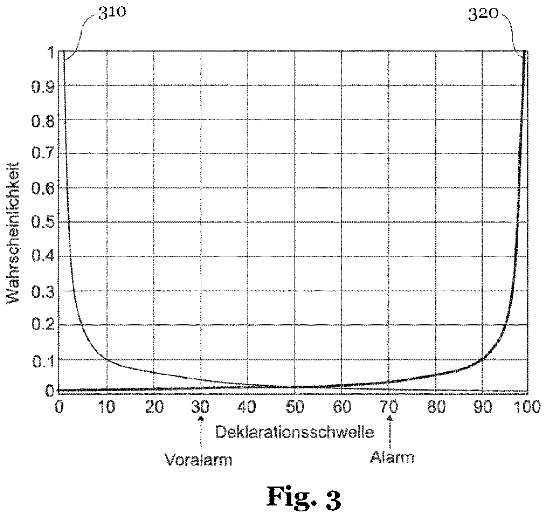

Fig. 3 veranschaulicht den schematischen Zusammenhang zwischen der Falschalarmrate (FAR) und der Deklarationswahrscheinlichkeit der Bedrohung (POD). Durch einen ersten Graph 310 sind nichtbedrohliche Objekte verdeutlicht, die fälschlicherweise als ein Alarm deklariert wurden. Der Graph 310 stellt die Falschalarmwahrscheinlichkeit (FAR) dar. Ein zweiter Graph 320 zeigt die Wahrscheinlichkeit (1-POD), dass ein bedrohliches Objekt fälschlicherweise nicht als Alarm deklariert wird. Zur Deklaration wird ein Schwellenwert genutzt, wobei ein erster niedriger Schwellenwert (z.B. bei 30%) einen Voralarm und ein zweiter höherer Schwellenwert (z.B. bei 70%) einen Alarm auslöst. Wenn der Schwellenwert gleich null wäre (linke Seite der Darstellung), würden alle Objekte einen Alarm auslösen. Dadurch triggern alle ungefährlichen Objekte einen Alarm/Voralarm. Mit einem Anstieg des Schwellenwertes fällt die FAR (siehe erster Graph 310) und der Wert für die Wahrscheinlichkeit (1-POD) (zweiter Graph 320) steigt an. Ein Schwellenwert von 100 (in Prozent des Wertebereiches der Sensorsignale) bedeutet, dass alle Objekte als nichtbedrohlich deklariert werden. Mit fallendem Schwellenwert gibt es immer weniger gefährliche Objekte, für die keine Warnung erfolgt (siehe zweiten Graph 320).

Je höher die Deklarationsschwelle liegt, desto geringer ist die Falschalarmrate. Gleichzeit erhöht sich aber auch die Wahrscheinlichkeit, dass eine tatsächliche Bedrohung fälschlicherweise als ein Falschalarm interpretiert und daher unterdrückt wird. Entsprechendes gilt für den Fall, dass die Deklarationsschwelle zu niedrig gewählt wird, was zu sehr vielen Falschalarmen führt - allerdings aber mit einer hohen Wahrscheinlichkeit, dass eine tatsächliche Bedrohung erkannt wird.

Wenn die möglichen Gegenmaßnahmen begrenzt sind, ist es in jedem Fall vorteilhaft, hohe Falschalarmraten zu vermeiden, da ansonsten die Gefahr besteht, dass im Falle einer tatsächlichen Bedrohung keine Gegenmaßnahmen mehr zur Verfügung stehen. Ausnahmen hiervon wären Gegenmaßnahmen, die sich nicht verbrauchen, wie beispielsweise sogenannte DIRCM (direct infrared counter measures). Wird ein Zielobjekt durch solche Systeme geschützt, kann bei einem Flugkörperwarner zugunsten der Warnzeit oder zugunsten der POD auch eine höhere Falschalarmrate akzeptiert werden. Dies kann beispielsweise durch geeignete Vorwarnungen berücksichtigt werden. Bei einer niedrigen Deklarationsschwelle werden bei solchen Vorwarnungen eine geringere Deklarationszeit und/oder eine höhere POD bei höherer FAR erreicht.

Neben der Erkennung von Beschuss, z.B. durch Raketen, können Flugkörperwarner auch für die Erkennung von feindlichem Beschuss mit nichtangetriebenen Projektilen (HFI: Hostal Fire Indication) verwendet werden. Hierbei wird je nach Spektralbereich der Mündungsblitz, die heiße Kugel oder bei Leuchtspurmunition die Leuchtspur detektiert.

Ein bekanntes System ist beispielsweise in US 3,653,016 offenbart, das eine Kombination eines breitbandigen Solarzellendetektors mit einem UV-sensitiven Detektor durch eine serielle Verschaltung kombiniert, sodass eine Bestätigung eines zuvor durch den Solarzellendetektor detektierten Ereignisses ermöglicht wird. Jedoch sind für dieses System die Ergebnisse noch nicht zufriedenstellend.

Ein weiteres bekanntes System ist in EP 2 911 092 A1 offenbart. Dieses System umfasst eine oder mehrere Photodetektoren zur Detektion und eine hochauflösende Kamera zur Verifikation und räumlichen Lokalisierung von Blitzereignissen. Integrales Attribut dieses Lokalisierungssystems ist dabei die Erzeugung zweier Detektionssignaldatensätze - eines durch die Photodetektoren, sowie eines weiteren durch die Kamera. Die räumliche Lokalisierung eines Blitzereignisses erfolgt also anhand zweier Datensätze, wobei anhand des ersten Datensatzes nur eine ungefähre Bestimmung der Position vorgenommen wird, und danach die Position des Blitzereignisses innerhalb des zweiten Datensatzes erst gesucht werden muss.

Das Dokument WO 2006/083278 A2 offenbart ein DIRCM-System (DIRCM: direct infrared counter measures), das ein Zielobjekt zunächst durch einen Flugkörperwarner in einem weiten Sichtfeld identifiziert, und anschließend anhand eines in dem weiten Sichtfeld ungefähr bestimmten Winkels ein Fein-Tracker-System auf das Zielobjekt auszurichten. Das Fein-Tracker-System deckt ein schmales Sichtfeld ab, in dem das Zielobjekt zunächst lokalisiert wird und dann genau verfolgt werden kann. Das Lokalisieren erfolgt dabei anhand gespeicherter Daten des Flugkörperwarners.

Das Dokument US 2017/0183104 A1 offenbart ein System für eine Gegenmaßnahme eines Flugzeugs gegen Peilung und insbesondere Dopplerbestimmung durch ein Radargerät eines bedrohlichen Objekts. Dabei wird als bedrohliches Objekt insbesondere ein Radargerät offenbart, das ausgebildet ist, um von einem Erfassungs- in einen Verfolgungsmodus geändert zu werden.

Das Dokument US 2002/0133294 A1 offenbart ein Verfahren und eine Vorrichtung zur Kollisionsvermeidung insbesondere von Flugzeugen. Dabei werden insbesondere Positionen der Flugzeuge durch das Global Positioning System bestimmt und basierend darauf Ausweichmanöver berechnet.

Darüber hinaus stellt die europäische Patentanmeldung EP 3 591 427 A1 ein Dokument des Stands der Technik im Sinne von Artikel 54(3) EPÜ dar.

Das Problem der Warnung vor einem Flugkörper, welches die Ortung und Verfolgung der instantanen räumlichen Position des Flugkörpers noch während dessen Fluges beinhalten und/oder eine schnellere Verifikation verlangt, ist damit nur unzureichend möglich.

Insgesamt besteht ein Bedarf nach verbesserten Systemen, die die obengenannten Probleme nicht aufweisen und ein hohes Maß an Sicherheit bieten.

### KURZBESCHREIBUNG DER ERFINDUNG

Zumindest ein Teil der obengenannten Probleme wird durch einen Flugkörperwarner nach Anspruch 1 und ein Verfahren nach Anspruch 10 gelöst. Die abhängigen Ansprüche beziehen sich auf vorteilhafte Weiterbildungen.

Die vorliegende Erfindung bezieht sich auf einen Flugkörperwarner und insbesondere auf einen passiven Flugkörperwarner. Der Flugkörperwarner umfasst einen Sensor (z.B. eine Kamera oder einen Infrarot-Sensor), eine Aufzeichnungseinrichtung (z.B. einen elektronischen Datenspeicher) sowie eine Auswerteeinheit (z.B. einen Prozessor zur elektronischen Datenverarbeitung). Der Sensor ist ausgebildet zum Detektieren eines potentiellen Flugkörpers (in einem geeignet gewählten Spektralbereich). Die Aufzeichnungseinrichtung ist ausgebildet zu einer fortlaufenden (z.B. rollierenden) Abspeicherung von Detektordaten des Sensors für einen vordefinierten Zeitraum (z.B. eine erwartete Flugzeit eines zu detektierenden Flugkörpers). Die Auswerteeinheit ist ausgebildet, um in einer Vorklassifikation von dem Sensor erzeugte Detektordaten von dem Sensor zu empfangen, um in den Detektordaten ein Detektionssignal (z.B. lokalisierte Intensitätsmaxima) des potentiellen Flugkörpers zu erkennen und mit einem Deklarationsschwellenwert zu vergleichen und nach einem Überschreiten des Deklarationsschwellenwertes ein Warnsignal (z.B. einen Voralarm) vor dem potentiellen Flugkörper zu erzeugen. Weiter ist die Auswerteeinheit ausgebildet, um in einer Klassifikation bei Vorliegen eines Warnsignals eine Verifikation des potentiellen Flugkörpers durch zeitliches Rückverfolgen des zugehörigen Detektionssignals unter Nutzung der in der Aufzeichnungseinrichtung gespeicherten Detektordaten durchzuführen.

Es versteht sich, dass Aufzeichnungseinrichtung und Auswerteeinheit mehrere Komponenten aufweisen und auch zumindest teilweise Bestandteil des Sensors sein können. So kann beispielsweise ein Vergleichen mit Schwellenwerten im Sensor selbst ausgeführt werden. Auch das Abspeichern von Detektordaten kann optional innerhalb des Sensors erfolgen.

Das vorangehend verwendete Adjektiv "potentiell" bezieht sich insbesondere auf potentiell gefährliche Flugkörper wie beispielsweise Geschosse oder Raketen. Solche Objekte erzeugen Signale, die von weiteren Signalen (z.B. einen ortsfesten Hintergrund) zu unterscheiden sind.

Die vorangehend verwendeten Begriffe "Vorklassifikation" und "Klassifikation" sind in einem breiten Sinn zu verstehen. So kann die Vorklassifikation oder auch die Klassifikation zum Beispiel lediglich die Erkennung eines Intensitätsmaximums in den Detektordaten beinhalten, und muss nicht zwingend die genauen Merkmale des Flugkörpers bestimmen.

Der vorangehend verwendete Begriff "Deklarationsschwellenwert" bezieht sich nicht zwingend direkt auf die Intensität von Bildpunkten, die vom Sensor erhalten werden. Vielmehr erfolgt zumindest in der Auswerteeinheit eine Analyse der detektierten Ereignisse (z.B. über die Zeit), so dass die Deklarationsschwelle sich beispielsweise auf abgeleitete Größen bezieht (z.B. wie schnell sich die Intensität von Bildpunkten mit der Zeit ändert).

Die Auswerteeinheit ist ausgebildet, um die Vorklassifikation und die Klassifikation anhand der Detektordaten und/oder der gespeicherten Detektordaten eines einzigen Sensors vorzunehmen.

Insbesondere arbeitet der Flugkörperwarner zur Erfüllung seiner Funktion mit dem Detektordatensatz eines einzigen Detektors, wodurch eine erhöhte Verifikationsgeschwindigkeit oder insgesamt ein schnelleres Ausgeben eines Alarms erreicht werden kann.

Optional ist die Auswerteeinheit weiter ausgebildet, um einen Alarm auszugeben bei der Verifikation eines potentiellen Flugkörpers und/oder bei Erreichen eines weiteren Deklarationsschwellenwerts durch das Detektionssignal, wobei dieser weitere Deklarationsschwellenwert größer ist als der Deklarationsschwellenwert für das Warnsignal.

Das Auslösen der Warnung oder des Alarms kann unmittelbar nach dem Feststellen eines Überschreitens des jeweiligen Deklarationsschwellenwertes erfolgen. Die konkrete Wahl für die (weitere) Deklarationsschwelle stellt ein Optimierungsproblem dar, um eine niedrige Falschalarmrate mit einer hohen Zuverlässigkeit (hohe POD) zu kombinieren. Beispielsweise kann der Deklarationsschwellenwert bei 30 liegen und eine Vorwarnung (höhere FAR bei höherer POD) auslösen. Bei der weiteren Deklarationsschwelle von 70 kann beispielsweise ein Alarm (niedrigere FAR bei niedrigerer POD) ausgegeben werden.

Optional ist die Auswerteeinheit weiter ausgebildet, um in der Vorklassifikation innerhalb der Detektordaten ein Detektionssignal oberhalb eines bestimmten, unter dem Deklarationsschwellenwert liegenden Schwellenwerts zu erkennen und zu verfolgen (tracken).

Optional sind der Sensor oder die Auswerteeinheit weiter ausgebildet, um beim Detektieren eine Position oder eine Richtung des potentiellen Flugkörpers zu erfassen. Die Auswerteeinheit kann zudem ausgebildet sein, um die Detektordaten und/oder die gespeicherten Detektordaten für einen Bereich um die Position oder der Richtung herum zu analysieren.

Unter einer Position soll dabei und im Folgenden insbesondere immer auch die Position innerhalb der Detektordaten verstanden werden, und nicht zwingenderweise die drei globalen Raumkoordinaten. Da der Sensor in eine bestimmte Richtung "schaut", definiert diese Position im Allgemeinen immer eine bestimmte Richtung. Unter einem Bereich um die Position oder Richtung soll insbesondere eine Ortsfilterung verstanden sein, sodass lediglich Bereiche analysiert werden, die in der näheren Umgebung der detektierten Position sind.

Optional ist die Auswerteeinheit weiter ausgebildet, um nach Erzeugung des Warnsignals in der Vorklassifikation gewonnene Informationen des Detektionssignals für die Klassifikation zu nutzen.

Die Information kann beispielsweise die Position des das Warnsignal auslösenden Detektionssignals oder auch die Veränderung der Position oder der Intensität des Detektionssignals in der Zeit umfassen. Die Information kann innerhalb der Klassifizierung zu einer Einschränkung von Parametern zur Verfolgung des Detektionssignals in den gespeicherten Detektordaten genutzt werden. Diese Einschränkung von Parametern kann beispielsweise aus einer Einschränkung auf einen Bereich um die Position oder Richtung des Detektionssignals bestehen. Die Einschränkung von Parametern erleichtert die Rückverfolgung des Detektionssignals des beobachteten potentiellen Flugkörpers innerhalb der Detektordaten deutlich, so dass bei der Rückverfolgung innerhalb der gespeicherten Detektordaten mit einem sehr viel niedrigeren Schwellenwert gearbeitet werden kann. Ein niedriger Schwellenwert führt normalerweise auf eine unerwünscht hohe Falschalarmrate. Diese Falschalarmrate wird jedoch hier durch die Einschränkung von Parametern entscheidend abgesenkt.

Optional ist die Auswerteeinheit ausgebildet, um die Rückverfolgung zeitlich bis zu einem möglichen Abschussereignis durchzuführen, wobei das Abschussereignis ein zeitlich lokalisiertes Maximum in den gespeicherten Detektordaten oder ein frühestmögliches Sensorsignal innerhalb der Rückverfolgung ist.

Optional ist die Auswerteeinheit weiter ausgebildet, um die in der Aufzeichnungseinrichtung gespeicherten Detektordaten für eine vorbestimmte Zeitdauer zu speichern und/oder nach einer vorbestimmten Zeitdauer zu löschen, wobei die vorbestimmte Zeitdauer abhängt von einer zu erwartenden Flugzeitdauer des potentiellen Flugkörpers zu einem Zielobjekt, das durch den Flugkörperwarner zu warnen ist.

Das Speichern durch die Auswerteeinheit ist notwendig für die Rückverfolgung . Die vorbestimmte Zeitdauer der Aufzeichnung kann von einer zu erwartenden Flugzeitdauer des potentiellen Flugkörpers zu einem Zielobjekt, das durch den Flugkörperwarner zu warnen ist, abhängen. So kann die vorbestimmte Zeitdauer beispielsweise in einem Bereich zwischen 10 Sekunden und 60 Sekunden oder zwischen 15 Sekunden und 50 Sekunden liegen, oder ungefähr 20 Sekunden oder ungefähr 30 Sekunden betragen. Wie allgemein üblich soll unter dem Begriff "Löschen" nicht zwingenderweise das physikalische Löschen verstanden werden, sondern nur eine Freigabe zum Überschreiben des entsprechenden Datenbereiches. Die angegebenen Zeitbereiche verstehen sich lediglich beispielhaft. Es versteht sich, dass der Zeitbereich insbesondere einstellbar ist und an die konkreten Gegebenheiten und an zu erwartende Flugkörper bzw. deren Geschwindigkeit angepasst werden kann.

Optional ist die Auswerteeinheit ausgebildet, um bei der Klassifikation zumindest Abschnitte des Detektionssignals in den gespeicherten Detektordaten mit einer bestimmten (der Auswerteeinheit vorher bekannten) Flugkörpersignatur zu vergleichen, um den Flugkörper als potentiell gefährlich einzustufen.

Ein potentiell gefährlicher Flugkörper weist eine bestimmte Flugkörpersignatur auf. Diese Flugkörpersignatur kann die Auswerteeinheit im Rahmen der Klassifikation mit bekannten Flugkörpersignaturen vergleichen, um so die Verifizierung des potentiellen Flugkörpers zu verbessern und dadurch die Falschalarmwahrscheinlichkeit zu senken.

Optional ist die Aufzeichnungseinrichtung weiter ausgebildet, um nur solche erfassten Detektordaten des Sensors zu speichern, die oberhalb eines Schwellenwertes liegen. Die Signale können außerdem fortlaufend komprimiert und als komprimierte Bilddaten abgespeichert werden. Der Sensor ist optional ausgebildet, um eine lokale oder globale Segmentierung in Echtzeit durchzuführen und nur Objektdaten an die Auswerteeinheit zu übertragen. Im Gegensatz zu Bilddaten können Objektdaten beispielsweisen Daten sein, die geeignet sind, um Objekte oder deren Eigenschaften zu identifizieren (z.B. worum es sich handelt und wo es sich befindet).

Die Speicherung von Detektordaten nur oberhalb eines Schwellenwertes sowie die Komprimierung kann der Reduktion der Menge an gespeicherten Detektordaten dienen und/oder die Implementierung eines Schwellenwertes bei der Rückverfolgung vorwegnehmen. Die Übertragung von Objektdaten kann eine Verifizierung erleichtern.

Die vorliegende Erfindung bezieht sich auch auf ein Verfahren zum Warnen vor einem Flugkörper. Das Verfahren umfasst die Schritte:
- Fortlaufendes Abspeichern von Detektordaten eines Sensors in einer Aufzeichnungseinrichtung für einen vordefinierten Zeitraum,
- Detektieren eines potentiellen Flugkörpers durch Identifikation eines Detektionssignals,
- Erzeugen eines Warnsignals vor dem potentiellen Flugkörper nach einem Überschreiten eines Deklarationsschwellenwertes durch das Detektionssignal,
- Verifizieren des potentiellen Flugkörpers durch zeitliches Rückverfolgen des Detektionssignals unter Nutzung der in der Aufzeichnungseinrichtung gespeicherten Detektordaten.

Es handelt sich also um eine Flugkörperwarnung, zu deren Erzeugung keine Signale ausgesendet zu werden brauchen (passiver Warner). Eventuell vorhandene Filter filtern den dabei zu erwartenden Wellenlängenbereich.

Optional umfasst das Verfahren weiter die Schritte
- Ausgeben und Weiterleiten eines Alarms nach dem Verifizieren des potentiellen Flugkörpers und/oder nach Erreichen eines Schwellenwertes oberhalb des Deklarationsschwellenwertes durch das Detektionssignal.

Optional beinhaltet das Verfahren, für das Verifizieren des potentiellen Flugkörpers Informationen aus der vorangehenden Identifikation des Detektionssignals zu verwenden.

Optional beinhaltet das Verfahren zudem das Durchführen des zeitlichen Rückverfolgens bis zu einem möglichen Abschussereignis, wobei das Abschussereignis ein zeitlich lokalisiertes Maximum in den aufgezeichneten Detektordaten oder ein frühestmögliches Sensorsignal innerhalb der Rückverfolgung ist.

### KURZBESCHREIBUNG DER FIGUREN

Die Ausführungsbeispiele der vorliegenden Erfindung werden besser verstanden von der folgenden detaillierten Beschreibung und den beiliegenden Zeichnungen, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein Schema für einen Flugkörperwarners gemäß einem Ausführungsbeispiel der vorliegenden Erfindung.
- Fig. 2A: zeigt eine Flugkörpersignatur mit den Reaktionen eines Flugkörperwarners gemäß einem Ausführungsbeispiel der vorliegenden Erfindung.
- Fig. 2B: zeigt eine Flugkörpersignatur mit den Reaktionen eines Flugkörperwarners gemäß einem weiteren möglichen Ausführungsbeispiel der vorliegenden Erfindung.
- Fig. 3: zeigt einen schematischen Zusammenhang zwischen FAR und POD.

### DETAILLIERTE BESCHREIBUNG DER FIGUREN

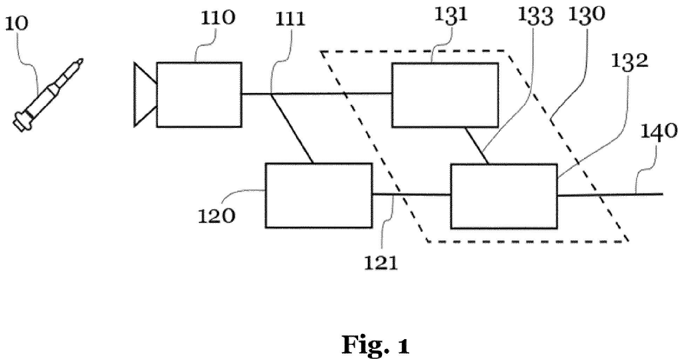

**Fig. 1** zeigt das Schema für einen Flugkörperwarner gemäß einem Ausführungsbeispiel der vorliegenden Erfindung. Der Flugkörperwarner umfasst baulich einen Sensor 110, eine Aufzeichnungseinrichtung 120 sowie eine Auswerteeinheit 130 (hier durch das gestrichelte Parallelogramm begrenzt). Der Sensor 110 ist ausgebildet zum Detektieren eines potentiellen Flugkörpers 10. Die dabei empfangenen Signale gibt der Sensor 110 als Detektordaten 111 sowohl an die Aufzeichnungseinrichtung 120 als auch an die Auswerteeinrichtung 130 weiter. Die Aufzeichnungseinrichtung 120 ist ausgebildet, um die Detektordaten 111 fortlaufend (rollierend) für eine vorbestimmte Zeitdauer abzuspeichern.

Die Auswerteeinheit 130 ist ausgebildet zur Erfüllung von zwei Funktionen, hier dargestellt durch Rechtecke im Inneren der Auswerteeinheit 131: Erstens ist sie ausgebildet, um in einer Vorklassifikation 131 die Detektordaten 111 zu empfangen und darin durch potentielle Flugkörper 10 ausgelöste Detektionssignale 230 zu identifizieren, sowie nach dem Überschreiten eines festgelegten Deklarationsschwellenwerts S2 durch ein Detektionssignal 230 ein Warnsignal 133 auszulösen. Optional ist diese Funktion ausgebildet, um in den Detektordaten 111 ein Detektionssignal 230 oberhalb einer bestimmten Schwelle S1 auszumachen, zu verfolgen und erst bei Erreichen des Deklarationsschwellenwertes S2 ein Warnsignal 133 auszulösen. Zweitens ist die Auswerteeinheit 130 ausgebildet, um bei Vorliegen des Warnsignals 133 in einer Klassifikation 132 eine Verifikation des potentiellen Flugkörpers 10 basierend auf einer Rückverfolgung 220 innerhalb der gespeicherten Detektordaten 121 durchzuführen. Die Rückverfolgung 220 kann dabei mit deutlich niedrigerem Schwellenwert So erfolgen. Optional wird die Rückverfolgung 220 unterstützt durch die Einschränkung der Suchparameter aufgrund der Information im zuvor identifizierten Detektionssignal 230, wobei die Einschränkung beispielsweise eine Position oder eine Richtung und/oder den bisher detektierten zeitlichen Verlauf des Detektionssignals 230 umfassen kann. Wird der potentielle Flugkörper 10 durch die Klassifikation 132 als solcher verifiziert, oder überschreitet das Detektionssignal 230 einen höheren Schwellenwert S3, gibt die Auswerteeinheit 130 einen Alarm 140 aus.

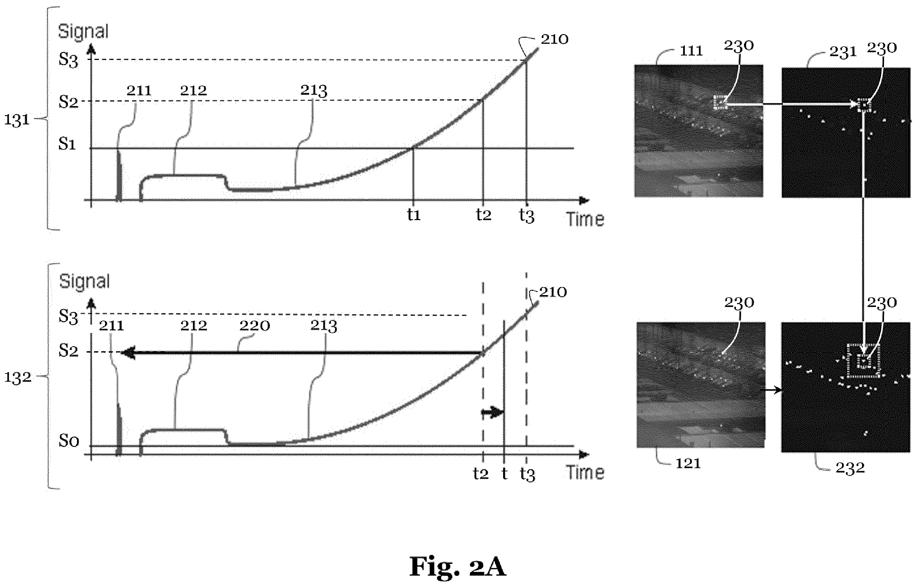

**Fig. 2A** veranschaulicht die Funktionsweise eines Ausführungsbeispiels der vorliegenden Erfindung.

Im linken Teil der Figur ist zwei Mal, übereinander angeordnet, ein schematisches Beispiel für eine Flugkörpersignatur 210 im zeitlichen Verlauf (Signal gegen Zeit (Time)) dargestellt. Die Flugkörpersignatur 210 kann beispielsweise ein durch einen Flugkörper 10 erzeugtes optisches Signal sein, das im sichtbaren, im IR- oder im UV-Spektralbereich erfassbar ist. Die Flugkörpersignatur 210 umfasst zunächst einen Abschussabschnitt 211, welcher beispielsweise bei einem Start einer Rakete oder einem Abschuss des Flugkörpers 10 erzeugt wird. Daran anschließend folgt ein Beschleunigungsabschnitt 212 (sogenannter Booster-Abschnitt), der einer Beschleunigungsphase des Flugkörpers 10 entspricht und mit einer erhöhten Intensität der erzeugten Strahlung verbunden ist. Schließlich umfasst die Flugkörpersignatur 210 einen Flugabschnitt 213 (ein sogenanntes Sustainer-Signal), das über die normale Flugzeit erzeugt wird.

Im rechten Teil der Figur sind in einem Feld oben links die Detektordaten 111 sowie in einem Feld unten links die gespeicherten Detektordaten 121 dargestellt; ferner sind in einem Feld 231 oben rechts die durch den Schwellenwert S1 der Vorklassifikation 131 gefilterten Detektordaten 111, und in einem Feld 232 unten rechts die durch den Schwellenwert So der Klassifikation 132 gefilterten gespeicherten Detektordaten 121 abgebildet.

Der obere Teil der Figur veranschaulicht beispielhaft die Vorklassifikation 131 der Auswerteeinheit 130: Die Flugkörpersignatur 210 wird durch die Auswerteeinheit als Detektionssignal 230 erkannt. Das Überschreiten des Schwellenwertes S1 zum Zeitpunkt t1 durch das Detektionssignal 230 löst in diesem Beispiel ein Tracking der Flugkörpersignatur 210 durch die Auswerteeinheit 130 innerhalb der Detektordaten 111 aus. Bei Überschreiten des Deklarationsschwellenwertes S2 durch die Flugkörpersignatur 210, hier zum Zeitpunkt t2, erzeugt die Auswerteeinheit 130 ein Warnsignal 133.

Der untere Teil der Figur veranschaulicht beispielhaft die Klassifikation 132 durch die Auswerteeinheit 130. Nach dem zum Zeitpunkt t2 ausgelösten Warnsignal 133 führt die Auswerteeinheit 130 innerhalb der gespeicherten Detektordaten 121 ein Rückverfolgen 220 der Flugsignatur 210 durch. Das Rückverfolgen 220 umfasst eine Analyse des Detektionssignals 230 in den gespeicherten Detektordaten 121 oberhalb eines niedrigen Schwellenwertes So. Eine sich aus dem niedrigen Schwellenwert So ergebende hohe Falschalarmrate wird beispielsweise kompensiert durch die Einschränkung der Analyse der Detektordaten 121 auf einen lokalen Bereich um die Position des Detektionssignals 230. Optional kann das Rückverfolgen 220 einen Vergleich mit einer der Auswerteeinheit 130 bekannten Flugsignatur 210 beinhalten und/oder über weitere durch die Vorklassifizierung 131 des Detektionssignals 230 bereits vorhandene Informationen, wie zum Beispiel den in der Vorklassifizierung 131 detektierte zeitliche Veränderung des Detektionssignals 230, verbessert und beschleunigt werden.

Dargestellt ist die Situation, in der das durch den potentiellen Flugkörper 10 in den Detektordaten 121 enthaltene Detektionssignal 230 mit hinreichender Genauigkeit durch das Rückverfolgen 220 als Flugkörpersignatur 210 eines gefährlichen Flugkörpers 10 verifiziert werden kann. Das Rückverfolgen 220 nimmt die Zeit von t2 bis t in Anspruch. Zum Zeitpunkt t ist die Verifikation abgeschlossen, und die Auswerteeinheit 230 löst einen Alarm 140 aus, der an ein übergeordnetes System weitergegeben wird.

Zum besseren Verständnis ist in Fig. 2A zudem ein Zeitpunkt t3 vermerkt, zu dem die Auswerteeinheit 130 die Flugkörpersignatur 210 nach einem Verfahren ohne Rückverfolgung verifiziert hätte. Optional ist die Auswerteeinheit 130 ausgebildet, um bei Erreichen des Schwellenwertes S3 (hier zum Zeitpunkt t3) einen Alarm 140 auszulösen, falls die Rückverfolgung 220 bis zum Zeitpunkt t3 nicht zu einer erfolgreichen Verifikation geführt haben sollte.

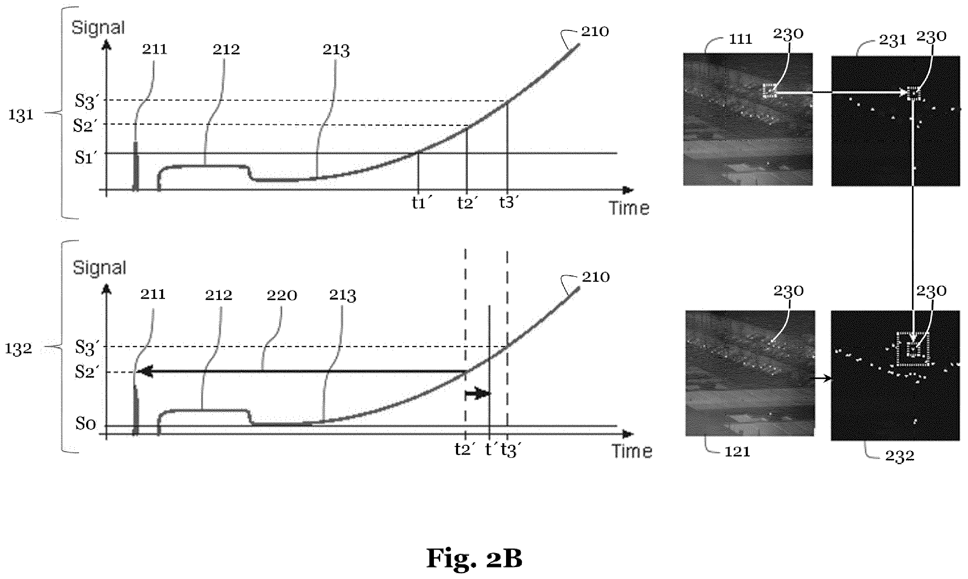

**Fig. 2B** veranschaulicht die Funktionsweise eines weiteren Ausführungsbeispiels der vorliegenden Erfindung. Die Figur ist inhaltlich aufgebaut wie Fig. 2A, allerdings sind in Fig. 2B die Detektionsschwellen S1, S2 und S3 der Auswerteeinheit heruntergesetzt zu S1', S2' und S3'. Dadurch wird die Zahl der Detektionssignale 230 größer, und die Wahrscheinlichkeit für Falschalarme ist erhöht. Detektion und das Erreichen der Deklarationsschwelle S2'für die Ausgabe des Warnsignals 133 finden für das gleiche Flugkörpersignal 210 allerdings früher statt (nämlich zu den Zeitpunkten t1' bzw. t2' anstatt t1 bzw. t2). Die Rückverfolgung 220 erlaubt aufgrund des niedrigeren Schwellenwerts So erneut eine Verifikation des Flugkörpersignals, und der Zeitpunkt t' der Ausgabe eines Alarms 140 liegt erneut vor dem Zeitpunkt t3', zu dem das Detektionssignal 230 den höheren Schwellenwert S3' erreicht und die Auswerteeinheit 130 einen Alarm 140 ausgibt. Im Vergleich zu der Situation, in welcher der Flugkörperwarner ohne Rückverfolgung 220 arbeitet und lediglich einen Alarm 140 ausgibt, wenn das Detektionssignal 230 den ursprünglichen Schwellenwert S3 erreicht hat (dies entspricht der in Fig. 2A dargestellten Situation ohne Rückverfolgung 220) führt das Ausführungsbeispiel nach Fig. 2B auf eine frühere Alarmierung bei gleichbleibender Falschalarmrate.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 10: potentieller Flugkörper
- 110: Sensor
- 111: Detektordaten
- 120: Aufzeichnungseinrichtung
- 121: gespeicherte Detektordaten
- 130: Auswerteeinheit
- 131: Vorklassifikation zur Identifikation eines Detektionssignals
- 132: Klassifikation zur Rückverfolgung eines Detektionssignals
- 133: Warnsignal
- 140: Alarm
- 210: Flugkörpersignatur
- 211: Abschusssignal
- 212: Beschleunigungssignal
- 213: Flugsignal
- 230: Detektionssignal
- 231: Detektordaten oberhalb des Schwellenwerts S1
- 232: Detektordaten oberhalb des Schwellenwerts So
- 310: Falschalarm-Wahrscheinlichkeit (FAR)
- 320: Wahrscheinlichkeit einer Nichterkennung (1-POD)
- S0, S1, S2, S3: Schwellenwerte
- t1, t2, t3: Zeitpunkte, zu denen die Flugkörpersignatur 210 die Schwellenwerte S1, S2, S3 erreicht
- t: Zeitpunkt, zu dem die Rückverfolgung 220 abgeschlossen ist

## Patentansprüche

1. Flugkörperwarner, insbesondere passiver Flugkörperwarner, mit:
einem Sensor (110) zum Detektieren eines potentiellen Flugkörpers (10);
einer Aufzeichnungseinrichtung (120) zur fortlaufenden Abspeicherung von Detektordaten (121) des Sensors (110) für einen vordefinierten Zeitraum;
einer Auswerteeinheit (130), die ausgebildet ist:
- um in einer Vorklassifikation (131) von dem Sensor (110) erzeugte Detektordaten (111) von dem Sensor (110) zu empfangen, um in den Detektordaten (111) ein Detektionssignal (230) des potentiellen Flugkörpers (10) zu erkennen und mit einem Deklarationsschwellenwert (S2) zu vergleichen und nach einem Überschreiten des Deklarationsschwellenwertes (S2) ein Warnsignal (133) vor dem potentiellen Flugkörper (10) zu erzeugen, und
- um in einer Klassifikation (132) bei Vorliegen eines Warnsignals (133) eine Verifikation des potentiellen Flugkörpers (10) durch zeitliches Rückverfolgen (220) des zugehörigen Detektionssignals (230) unter Nutzung der in der Aufzeichnungseinrichtung (120) gespeicherten Detektordaten (121) durchzuführen,
wobei die Auswerteeinheit (130) ausgebildet ist, um die Vorklassifikation (131) und die Klassifikation (132) anhand der Detektordaten (111) und/oder der gespeicherten Detektordaten (121) eines einzigen Sensors (110) vorzunehmen.

2. Flugkörperwarner nach einem der vorhergehenden Ansprüche, wobei die Auswerteeinheit (130) weiter ausgebildet ist, um zumindest eine der folgenden Alarmierungen auszugeben:
- einen Alarm (140) bei der Verifikation des potentiellen Flugkörpers (10),
- einen Alarm (140) bei Erreichen eines weiteren Deklarationsschwellenwerts (S3) durch das Detektionssignal (230), wobei der weitere Deklarationsschwellenwert (S3) größer ist als der Deklarationsschwellenwert (S2) des Warnsignals (133).

3. Flugkörperwarner nach einem der vorhergehenden Ansprüche, bei dem die Auswerteeinheit (130) weiter ausgebildet ist, um in der Vorklassifikation (131) innerhalb der Detektordaten (111) ein Detektionssignal (230) oberhalb eines bestimmten, unter dem Deklarationsschwellenwert (S2) liegenden Schwellenwerts (S1) zu erkennen und zu verfolgen.

4. Flugkörperwarner nach einem der vorhergehenden Ansprüche, wobei
- der Sensor (110) oder die Auswerteeinheit (130) weiter ausgebildet sind, um beim Detektieren eine Position oder eine Richtung des potentiellen Flugkörpers (10) zu erfassen und
- die Auswerteeinheit (130) ausgebildet ist, um die Detektordaten (111) und/oder die gespeicherten Detektordaten (121) für einen Bereich um die Position oder der Richtung herum zu analysieren.

5. Flugkörperwarner nach einem der vorhergehenden Ansprüche, wobei die Auswerteeinheit (130) ausgebildet ist, um nach Erzeugung des Warnsignals (133) die in der Vorklassifikation (131) gewonnenen Informationen des Detektionssignals (230) für die Klassifikation (132) zu nutzen.

6. Flugkörperwarner nach einem der vorhergehenden Ansprüche, wobei die Auswerteeinheit (130) ausgebildet ist, um die Rückverfolgung (220) zeitlich bis zu einem möglichen Abschussereignis (211) durchzuführen, wobei das Abschussereignis (211) ein zeitlich lokalisiertes Maximum in den gespeicherten Detektordaten (121) oder ein frühestmögliches Sensorsignal innerhalb der Rückverfolgung (220) ist.

7. Flugkörperwarner nach einem der vorhergehenden Ansprüche, wobei die Auswerteeinheit (130) weiter ausgebildet ist, um die in der Aufzeichnungseinrichtung (120) gespeicherten Detektordaten (121) für eine vorbestimmte Zeitdauer zu speichern und/oder nach einer vorbestimmten Zeitdauer zu löschen, wobei die vorbestimmte Zeitdauer abhängt von einer zu erwartenden Flugzeitdauer des potentiellen Flugkörpers (10) zu einem Zielobjekt, das durch den Flugkörperwarner zu warnen ist.

8. Flugkörperwarner nach einem der vorhergehenden Ansprüche, wobei ein potentiell gefährlicher Flugkörper (10) eine bestimmte Flugkörpersignatur (210) aufweist und die Auswerteeinheit (130) weiter ausgebildet ist, um bei der Klassifikation (132) zumindest Abschnitte des Detektionssignals (230) in den gespeicherten Detektordaten (121) mit der bestimmten Flugkörpersignatur (210) zu vergleichen, um den Flugkörper (10) als potentiell gefährlich einzustufen.

9. Flugkörperwarner nach einem der vorhergehenden Ansprüche,
- wobei die Aufzeichnungseinrichtung (130) ausgebildet ist, um nur solche im Sensor (110) erzeugten Detektordaten (111) zu speichern, die oberhalb eines Schwellenwertes (S0) liegen, und insbesondere fortlaufend zu komprimieren und als komprimierte Bilddaten abzuspeichern, und
- wobei der Sensor (110) ausgebildet ist, um eine lokale oder globale Segmentierung in Echtzeit durchzuführen und nur Objektdaten an die Auswerteeinheit (130) zu übertragen.

10. Verfahren zum Warnen vor einem Flugkörper (10) mit folgenden Schritten:
- Fortlaufendes Abspeichern von Detektordaten (111) eines Sensors (110) in einer Aufzeichnungseinrichtung (120) für einen vordefinierten Zeitraum,
- Detektieren eines potentiellen Flugkörpers (10) durch Identifikation eines Detektionssignals (230),
- Erzeugen eines Warnsignals (133) vor dem potentiellen Flugkörper (10) nach einem Überschreiten eines Deklarationsschwellenwertes (S2) durch das Detektionssignal (230),
- Verifizieren des potentiellen Flugkörpers (10) durch zeitliches Rückverfolgen (220) des Detektionssignals (230) unter Nutzung der in der Aufzeichnungseinrichtung (120) gespeicherten Detektordaten (121),
wobei die Vorklassifikation (131) und die Klassifikation (132) anhand der Detektordaten (111) und/oder der gespeicherten Detektordaten (121) eines einzigen Sensors (110) vorgenommen wird.

11. Verfahren nach Anspruch 10, erweitert um den Schritt:
- Ausgeben und Weiterleiten eines Alarms (140) nach dem Verifizieren des potentiellen Flugkörpers (10) und/oder nach Erreichen eines Schwellenwertes (S3) oberhalb des Deklarationsschwellenwertes (S2) durch das Detektionssignal (230).

12. Verfahren nach Anspruch 10 oder Anspruch 11, in dem das Verifizieren des potentiellen Flugkörpers (10) Informationen aus der vorangehenden Identifikation des Detektionssignals (230) verwendet.

13. Verfahren nach einem der Ansprüche 10 bis 12, in dem das zeitliche Rückverfolgen (220) bis zu einem möglichen Abschussereignis (211) durchgeführt wird, wobei das Abschussereignis (211) ein zeitlich lokalisiertes Maximum in den aufgezeichneten Detektordaten (121) oder ein frühestmögliches Sensorsignal innerhalb der Rückverfolgung (220) ist.

## Claims

1. A missile detector, in particular a passive missile detector, comprising:
a sensor (110) for detecting a potential missile (10);
a recording device (120) for continuously storing detector data (121) of the sensor (110) for a predefined period of time;
an evaluation unit (130) which is designed:
- to receive detector data (111) generated by the sensor (110) in a pre-classification (131) from the sensor (110), to detect a detection signal (230) of the potential missile (10) in the detector data (111) and to compare it with a declaration threshold value (S2) and, after the declaration threshold value (S2) has been exceeded, to generate a warning signal (133) ahead of the potential missile (10), and
- to carry out a verification of the potential missile (10) in a classification (132) if there is a warning signal (133) by temporally tracing (220) the associated detection signal (230) using the detector data (121) stored in the recording device (120),
wherein the evaluation unit (130) is designed to carry out the pre-classification (131) and the classification (132) on the basis of the detector data (111) and/or the stored detector data (121) of a single sensor (110).

2. The missile detector according to one of the preceding claims, wherein the evaluation unit (130) is further designed to output at least one of the following alarms:
- an alarm (140) when the potential missile (10) is verified,
- an alarm (140) when a further declaration threshold value (S3) is reached by the detection signal (230), wherein the further declaration threshold value (S3) is greater than the declaration threshold value (S2) of the warning signal (133).

3. The missile detector according to either of the preceding claims, in which the evaluation unit (130) is further designed to detect and trace, in the pre-classification (131), within the detector data (111), a detection signal (230) above a certain threshold value (S1) below the declaration threshold value (S2).

4. The missile detector according to any of the preceding claims, wherein
- the sensor (110) or the evaluation unit (130) are further designed to detect a position or a direction of the potential missile (10) and
- the evaluation unit (130) is designed to analyze the detector data (111) and/or the stored detector data (121) for a range around the position or the direction.

5. The missile detector according to any of the preceding claims, wherein the evaluation unit (130) is designed to use the information of the detection signal (230) obtained in the pre-classification (131) for the classification (132) after generation of the warning signal (133).

6. The missile detector according to any of the preceding claims, wherein the evaluation unit (130) is designed to carry out the tracing (220) temporally up to a possible launch event (211), wherein the launch event (211) is a temporally localized maximum in the stored detector data (121) or an earliest possible sensor signal within the tracing (220).

7. The missile detector according to any of the preceding claims, wherein the evaluation unit (130) is further designed to store the detector data (121) stored in the recording device (120) for a predetermined period of time and/or to delete them after a predetermined period of time, wherein the predetermined period of time depends on an expected flight time of the potential missile (10) to a target object that is to be warned by the missile detector.

8. The missile detector according to any of the preceding claims, wherein a potentially dangerous missile (10) has a certain missile signature (210), and the evaluation unit (130) is further designed to compare, during the classification (132), at least portions of the detection signal (230) in the stored detector data (121) with the certain missile signature (210), in order to classify the missile (10) as potentially dangerous.

9. The missile detector according to any of the preceding claims,
- wherein the recording device (130) is designed to store only the detector data (111) generated in the sensor (110) which are above a threshold value (S0), and in particular to compress them continuously and to store them as compressed image data, and
- wherein the sensor (110) is designed to perform a local or global segmentation in real time and transmit only object data to the evaluation unit (130).

10. A method for warning ahead of a missile (10), comprising the following steps:
- continuously storing detector data (111) of a sensor (110) in a recording device (120) for a predefined period of time,
- detecting a potential missile (10) by identifying a detection signal (230),
- generating a warning signal (133) ahead of the potential missile (10) after a declaration threshold value (S2) has been exceeded by the detection signal (230),
- verifying the potential missile (10) by temporally tracing (220) the detection signal (230) using the detector data (121) stored in the recording device (120),
wherein the pre-classification (131) and the classification (132) are carried out on the basis of the detector data (111) and/or the stored detector data (121) of a single sensor (110).

11. The method according to claim 10, extended by the step of:
- issuing and forwarding an alarm (140) after the potential missile (10) has been verified and/or after a threshold value (S3) above the declaration threshold value (S2) has been reached by the detection signal (230).

12. The method according to claim 10 or claim 11, in which verifying the potential missile (10) uses information from the previous identification of the detection signal (230).

13. The method according to any of claims 10 to 12, in which the temporal tracing (220) is carried out up to a possible launch event (211), wherein the launch event (211) is a temporally localized maximum in the recorded detector data (121) or an earliest possible sensor signal within the tracing (220).

## Revendications

1. Avertisseur de missile, en particulier avertisseur de missile passif, comportant :
un capteur (110) pour la détection d'un missile potentiel (10) ;
un dispositif d'enregistrement (120) pour le stockage continu de données de détecteur (121) du capteur (110) pendant une période prédéfinie ;
une unité d'évaluation (130), laquelle est configurée pour :
- recevoir, en provenance du capteur (110), des données de détecteur (111) générées par le capteur (110) dans une préclassification (131), afin de reconnaître dans les données de détecteur (111) un signal de détection (230) du missile potentiel (10) et de le comparer à une valeur seuil de déclaration (S2) et de générer un signal d'avertissement (133) vis-à-vis du missile potentiel (10) après un dépassement de la valeur seuil de déclaration (S2), et
- réaliser, dans une classification (132), en présence d'un signal d'avertissement (133), une vérification du missile potentiel (10) par un traçage dans le temps (220) du signal de détection (230) correspondant en utilisant les données de détecteur mémorisées (121) dans le dispositif d'enregistrement (120),
dans lequel l'unité d'évaluation (130) est configurée pour effectuer la préclassification (131) et la classification (132) à l'aide des données de détecteur (111) et/ou des données de détecteur mémorisées (121) d'un seul capteur (110).

2. Avertisseur de missile selon l'une des revendications précédentes, dans lequel l'unité d'évaluation (130) est en outre configurée pour émettre au moins l'une des alertes suivantes :
- une alarme (140) lors de la vérification du missile potentiel (10),
- une alarme (140) lorsqu'une autre valeur seuil de déclaration (S3) est atteinte par le signal de détection (230), dans lequel l'autre valeur seuil de déclaration (S3) est supérieure à la valeur seuil de déclaration (S2) du signal d'avertissement (133).

3. Avertisseur de missile selon l'une des revendications précédentes, dans lequel l'unité d'évaluation (130) est en outre configurée pour reconnaître et pour suivre, dans la préclassification (131), au sein des données de détecteur (111), un signal de détection (230) supérieur à une valeur seuil (S1) déterminée inférieure à la valeur seuil de déclaration (S2).

4. Avertisseur de missile selon l'une des revendications précédentes, dans lequel
- le capteur (110) ou l'unité d'évaluation (130) sont en outre configurés pour détecter une position ou une direction du missile potentiel (10) lors de la détection et
- l'unité d'évaluation (130) est configurée pour analyser les données de détecteur (111) et/ou les données de détecteur mémorisées (121) pour une zone autour de la position ou de la direction.

5. Avertisseur de missile selon l'une des revendications précédentes, dans lequel l'unité d'évaluation (130) est configurée pour utiliser, après la génération du signal d'avertissement (133), les informations du signal de détection (230) obtenues dans la préclassification (131) pour la classification (132).

6. Avertisseur de missile selon l'une des revendications précédentes, dans lequel l'unité d'évaluation (130) est configurée pour effectuer le traçage (220) dans le temps jusqu'à un événement de lancement (211) possible, dans lequel l'événement de lancement (211) est un maximum localisé dans le temps dans les données de détecteur mémorisées (121)ou un signal de capteur le plus précoce possible au sein du traçage (220).

7. Avertisseur de missile selon l'une des revendications précédentes, dans lequel l'unité d'évaluation (130) est en outre configurée pour mémoriser les données de détecteur (121) mémorisées dans le dispositif d'enregistrement (120) pendant une durée prédéterminée et/ou pour les effacer après une durée prédéterminée, dans lequel la durée prédéterminée dépend d'une durée de vol attendue du missile potentiel (10) vers un objet cible qui doit être averti par l'avertisseur de missile.

8. Avertisseur de missile selon l'une des revendications précédentes, dans lequel un missile potentiellement dangereux (10) présente une signature de missile (210) déterminée et l'unité d'évaluation (130) est en outre configurée pour comparer, lors de la classification (132), au moins des sections du signal de détection (230) dans les données de détecteur mémorisées (121) avec la signature de missile (210) déterminée afin de classer le missile (10) comme potentiellement dangereux.

9. Avertisseur de missile selon l'une des revendications précédentes,
- dans lequel l'unité d'évaluation (130) est configurée pour mémoriser uniquement des données de détecteur (111) générées dans le capteur (110) qui se situent au-dessus d'une valeur seuil (S0), et en particulier pour les comprimer en continu et les enregistrer sous forme de données d'image comprimées, et
- dans lequel le capteur (110) est configuré pour réaliser une segmentation locale ou globale en temps réel et pour ne transmettre que des données d'objet à l'unité d'évaluation (130).

10. Procédé pour l'avertissement d'un missile (10), comportant les étapes suivantes :
- mémorisation en continu de données de détecteur (111) d'un capteur (110) dans un dispositif d'enregistrement (120) pendant une période prédéfinie,
- détection d'un missile potentiel (10) en identifiant un signal de détection (230),
- génération d'un signal d'avertissement (133) vis-à-vis du missile potentiel (10) après un dépassement d'une valeur seuil de déclaration (S2) par le signal de détection (230),
- vérification du missile potentiel (10) par traçage dans le temps (220) du signal de détection (230) en utilisant les données de détecteur (121) mémorisées dans le dispositif d'enregistrement (120),
dans lequel la préclassification (131) et la classification (132) sont effectuées à l'aide des données de détecteur (111) et/ou des données de détecteur mémorisées (121) d'un seul capteur (110).

11. Procédé selon la revendication 10, étendu à l'étape consistant à :
- émettre et transmettre une alarme (140) après la vérification du missile potentiel (10) et/ou après qu'une valeur seuil (S3) supérieure à la valeur seuil de déclaration (S2) a été atteinte par le signal de détection (230).

12. Procédé selon la revendication 10 ou la revendication 11, dans lequel la vérification du missile potentiel (10) utilise des informations provenant de l'identification préalable du signal de détection (230).

13. Procédé selon l'une des revendications 10 à 12, dans lequel le traçage dans le temps (220) est réalisé jusqu'à un événement de lancement (211) possible, dans lequel l'événement de lancement (211) est un maximum localisé dans le temps dans les données de détecteur mémorisées (121) ou un signal de capteur le plus précoce possible au sein du traçage (220).
